# EUROPEAN PATENT APPLICATION

(11) **EP 2 675 176 A1**
(43) Date of publication of application: **18.12.2013**
(21) Application number: 13166006.0
(22) Date of filing: 30.04.2013
(51) Int. Cl.: H04N 13/04

(54) **Multi-view device, display apparatus and control methods thereof**

(30) Priority: 13.06.2012 KR 20120063080
(71) Applicant: Samsung Electronics Co., Ltd, Gyeonggi-do 443-742 (KR)
(72) Inventor: Seo, Je-hwan, Daegu (KR); Na, Moon-sung, Yongin-si (KR); Yang, Geun-sam, Suwon-si (KR); Lee, Sang-han, Hwaseong-si (KR); Lee, Seung-bok, Suwon-si (KR)
(74) Representative: Waddington, Richard

(57) **Abstract**

A multi-view device includes a lens unit which operates to selectively transmit or block light; a communication unit which communicates with a display apparatus which is displaying an image; and a controller which receives, from the display apparatus via the communication unit, a beacon signal which synchronizes with a display period of the displayed image, controls an operation of the lens unit based on the beacon signal, and changes, via the communication unit, a reception frequency of the beacon signal based on information relating to a wireless communication environment level between the display apparatus and the multi-view device which is extracted from the beacon signal.

## Description

### BACKGROUND

### Field

Apparatuses and methods consistent with the exemplary embodiments relate to a multi-view device which operates in conjunction with a display apparatus which displays a content image, a display apparatus and control methods thereof, and more particularly to a multi-view device of a display apparatus which has an improved operation structure corresponding to a period of displaying a content image, a display apparatus and control methods thereof.

### Description of the Related Art

A display apparatus processes an image signal which is received from an external image source and displays an image on a display panel, e.g., a liquid crystal display (LCD) panel. The display apparatus scans scan lines which include image information onto the panel so as to display an image on the panel, and the scan lines are sequentially arranged on the panel to construct a single image frame.

Although one display apparatus generally displays a single content image at a time, the display apparatus may display either or both of a two-dimensional (2D) image or three-dimensional (3D) image, or the display apparatus may provide a plurality of content images to different users depending on required conditions.

In an illustrative case of displaying a 3D image, both eyes of a user have different viewing angles with respect to the image, and thus the user perceives an object three-dimensionally. According to such a principle, the display apparatus discriminately displays a left-eye image and a right-eye image, and the user perceives the left-eye image and the right-eye image with the left eye and the right eye, respectively, thereby seeing a 3D image. Similarly to the principle of discriminately displaying a left-eye image and a right-eye image, in an illustrative case of providing a plurality of content images, the display apparatus discriminately displays at least two different content images, and a plurality of users selectively perceive the content images, and thus each user may recognize a different content image.

In order that a user selectively sees any one among a left-eye image and a right-eye image of a 3D image and a plurality of content images displayed on a display apparatus, the display apparatus includes or operates in conjunction with a multi-view device which performs such a function. In a display system which displays a 3D image, the multi-view device may be provided as 3D glasses which operate to selectively transmit/block light for both eyes of the user.

### SUMMARY

According to the present invention there is provided an apparatus and method as set forth in the appended claims. Other features of the invention will be apparent from the dependent claims, and the description which follows.

According to an aspect of an exemplary embodiment, there is provided a multi-view device including: a lens unit which selectively transmits or blocks light; a communication unit which communicates with a display apparatus which displays an image; and a controller which receives, from the display apparatus via the communication unit, a beacon signal which synchronizes with a display period of the displayed image, controls an operation of the lens unit based on the beacon signal, and changes, via the communication unit, a reception frequency of the beacon signal based on information relating to a wireless communication environment level between the display apparatus and the multi-view device which is extracted from the beacon signal.

The controller may reduce the reception frequency when the wireless communication environment level is higher than a predetermined threshold level, and may increase the reception frequency when the wireless communication environment level is lower than the predetermined threshold level.

The wireless communication environment level may vary inversely with respect to a wireless noise level detected by scanning a frequency channel of the display apparatus over which the beacon signal is transmitted.

The wireless communication environment level may vary directly with respect to a reception success rate of receiving the beacon signal from the display apparatus via the communication unit.

The controller may extract the wireless communication environment level including a preset integer from the beacon signal and changes a reception period of the beacon signal to a preset period based on the preset integer.

The controller may change the reception frequency of the beacon signal by performing at least one of adjusting a reception period of the beacon signal to be longer than a default value and adjusting the reception period of the beacon signal to be shorter than the default value.

The default value of the reception period may be designated as being equal to a value that is a multiplicative product of a preset integer and a transmission period relating to the display apparatus.

The controller may periodically extract updated information relating to the wireless communication environment level from the beacon signal in correspondence with a periodic reception of the beacon signal, and may change the reception frequency in real time based on the updated information relating to the wireless communication environment level.

The controller may maintain the reception frequency at a default value when the information relating to the wireless communication environment level is not extracted from the beacon signal.

In accordance with an aspect of another exemplary embodiment, there is provided a display apparatus including: a signal receiver which receives an image signal; a signal processor which processes the received image signal by executing a preset image processing process for displaying an image on a display; a communication unit which communicates with at least one multi-view device which operates in synchronization with the displaying the image; and a controller which transmits a beacon signal which synchronizes with a display period of the displayed image to the at least one multi-view device via the communication unit, determines a wireless communication environment level between the display apparatus and the multi-view device, and records the determined wireless communication environment level in the beacon signal so that the multi-view device changes a reception frequency of the beacon signal based on the wireless communication environment level recorded in the beacon signal.

The controller may detect a wireless noise level by scanning a frequency channel over which the beacon signal is transmitted, and determines the wireless communication environment level based on an inverse variation with respect to the wireless noise level.

The controller may determine a reception success rate of the multi-view device with respect to receiving the beacon signal, and may determine the wireless communication environment level based on a direct variation with respect to the reception success rate.

The controller may record the wireless communication environment level as a preset integer in the beacon signal so that the multi-view device extracts the wireless communication environment level including the preset integer from the beacon signal and changes a reception period of the beacon signal to a preset period based on the preset integer.

The controller may determine the wireless communication environment level periodically while transmitting the beacon signal, and may record and transmit information relating to the periodically determined wireless communication environment level in the beacon signal in real time.

The controller may record information relating to the wireless communication environment level in the beacon signal only during a preset interval of a time range during which the beacon signal is transmitted.

In accordance with an aspect of another exemplary embodiment, there is provided a control method of a multi-view device, the control method including: receiving a beacon signal which synchronizes with a display period of an image which is displayed by a display apparatus; extracting information relating to a wireless communication environment level between the display apparatus and the multi-view device from the beacon signal and changing a reception frequency of the beacon signal based on the extracted information; and receiving the beacon signal with the changed reception frequency and operating a lens unit of the multi-view device based on the received beacon signal.

The changing the reception frequency of the beacon signal may include performing at least one of reducing the reception frequency when the wireless communication environment level is higher than a predetermined threshold level, and increasing the reception frequency when the wireless communication environment level is lower than the predetermined threshold level.

The wireless communication environment level may vary inversely with respect to a wireless noise level detected by scanning a frequency channel of the display apparatus over which the beacon signal is transmitted.

The wireless communication environment level may vary directly with respect to a reception success rate of receiving the beacon signal from the display apparatus via a communication unit.

In accordance with an aspect of another exemplary embodiment, there is provided a control method of a display apparatus, the control method including: displaying an image; determining a wireless communication environment level between the display apparatus and at least one multi-view device which operates in synchronization with the displaying the image; generating a beacon signal which synchronizes with a display period of the displayed image, and recording information relating to the determined wireless communication environment level in the beacon signal so that the multi-view device changes a reception frequency of the beacon signal based on the recorded information; and transmitting the beacon signal which includes the recorded information to the multi-view device.

### BRIEF DESCRIPTION OF THE DRAWINGS

The above and/or other aspects will become apparent and more readily appreciated from the following description of exemplary embodiments, taken in conjunction with the accompanying drawings, in which:

FIG. 1 shows an illustrative example of a display system according to a first exemplary embodiment.

FIG. 2 shows an illustrative example of a display system according to a second exemplary embodiment.

FIG. 3 is a block diagram which illustrates configurations of a display apparatus and shutter glasses as used in the display system of FIG. 1.

FIG. 4 is a schematic view which illustrates a transmission and a reception of a signal between the display apparatus and the shutter glasses of FIG. 3.

FIG. 5 is a table which illustrates a configuration of parameters of one beacon packet which is transmitted at a particular time from the display system of FIG. 1.

FIG. 6 is a table which illustrates a configuration of parameters of a beacon packet which includes wireless communication environment level information recorded by the display system of FIG. 1 according to an exemplary embodiment.

FIG. 7 is a timing diagram which illustrates beacon packets transmitted by the display system of FIG. 1 and received by the shutter glasses.

FIG. 8 is a flowchart which illustrates a control method which is executable by using the display system of FIG. 1.

FIG. 9 is a flowchart which illustrates a control method which is executable by using a pair of shutter glasses as shown in FIG. 1.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

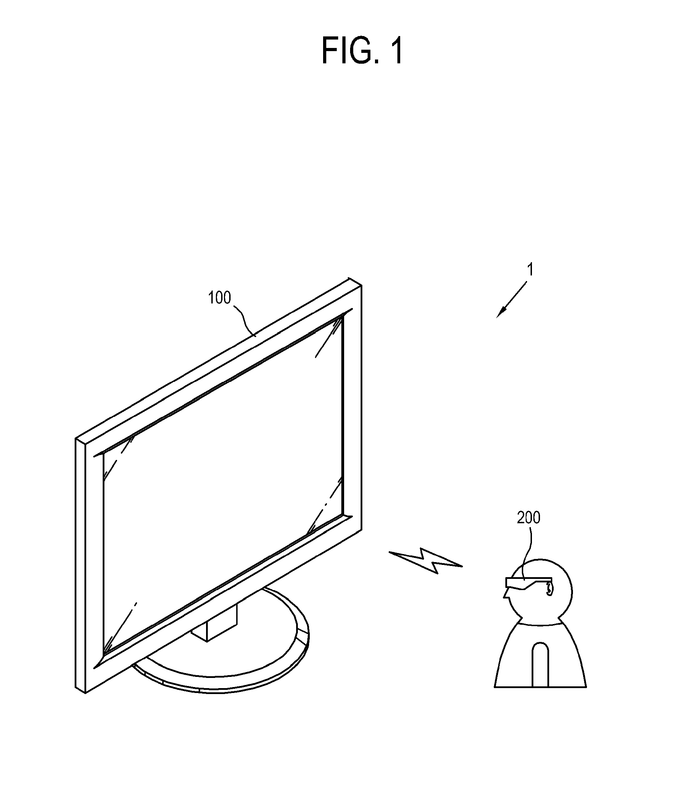

FIG. 1 shows an illustrative example of a display system 1 according to a first exemplary embodiment.

As shown in FIG. 1, the display system 1 includes a display apparatus 100 which processes an image signal which is received from the outside in order to display an image, and a multi-view device 200 which operates in correspondence with an image which is displayed on the display apparatus 100.

In the present exemplary embodiment, the multi-view device 200 includes 3D glasses 200 which operate to selectively transmit or block light in correspondence with a three-dimensional (3D) image when the display apparatus 100 displays the 3D image. However, the multi-view device 200 may be employed when the display apparatus 100 displays not only a 3D image but also at least two different content images.

The display apparatus 100 receives an image signal from an external image source (not shown). The image source is not particularly limited, and the display apparatus 100 may be provided with an image signal from any one or more of various image sources, such as a main computer (not shown) which generates an image signal by using a central processing unit (CPU) (not shown) and a graphics card (not shown) and provides the signal locally, a server (not shown) which provides an image signal to a network, and a transmitter (not shown) of a broadcasting station which transmits a broadcast signal by using a ground wave or cable.

The display apparatus 100 receives a two-dimensional (2D) image signal which corresponds to a 2D image or a 3D image signal which corresponds to a 3D image from the outside, and processes the image signals in order to display images. In particular, unlike a 2D image, a 3D image includes a left-eye image frame which corresponds to a left eye of a user and a right-eye image frame which corresponds to a right eye of the user. When receiving a 3D image signal, the display apparatus 100 alternatingly displays a left-eye image frame and a right-eye image frame accordingly.

The 3D glasses 200 are provided as shutter glasses. When a 3D image is displayed on the display apparatus 100, the shutter glasses 200 selectively open or block a respective view for each of the right eye and the left eye of the user in correspondence with a currently displayed image frame among the left-eye image frame and the right-eye image frame. In particular, if the left-eye image frame is displayed on the display apparatus 100, the shutter glasses 200 open a left-eye view of the user and block a right-eye view. Conversely, if the right-eye image frame is displayed on the display apparatus 100, the shutter glasses 200 open the right-eye view and block the view of the left eye.

In order to match a 3D image displayed on the display apparatus 100 with a selective light transmitting/blocking operation of the shutter glasses 200, the display apparatus 100 generates a synchronization signal or beacon signal to synchronize with a display timing of an image frame and transmits the signal to the shutter glasses 200. The shutter glasses 200 perform a light transmitting/blocking operation based on the received beacon signal.

In the display system 1 described above, the display apparatus 100 may provided as a home television (TV). In particular, the display apparatus 100 includes a display panel (not shown) which displays an image and transmits a beacon signal which corresponds to the displayed image to the shutter glasses 200.

However, the present exemplary embodiment may be applied to any different type of display system, without being limited to the display system 1 shown in FIG. 1.

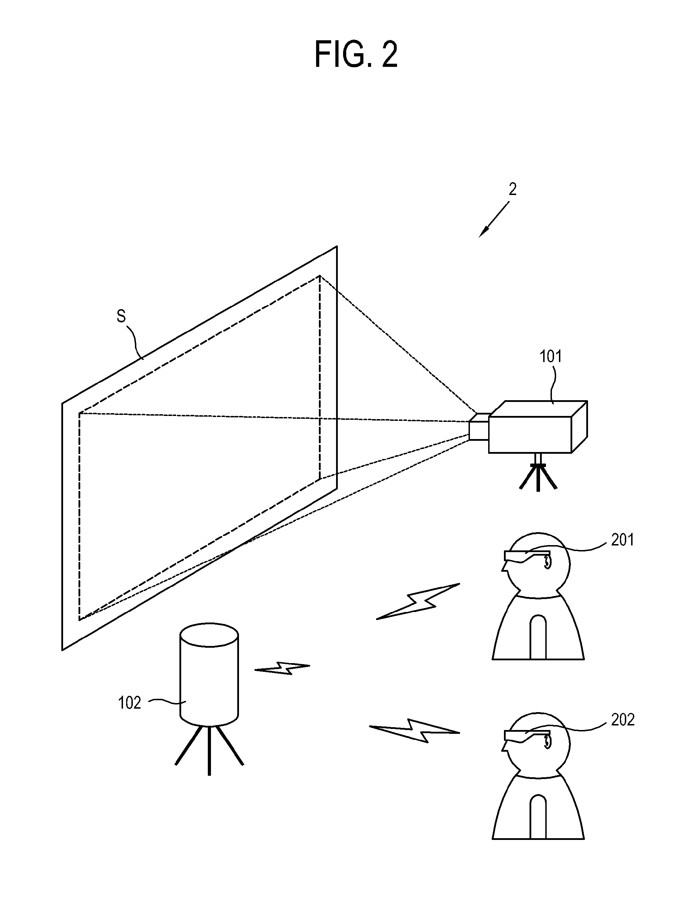

FIG. 2 shows an illustrative example of a display system 2, according to a second exemplary embodiment.

As shown in FIG. 2, the display system 2 includes a cinema system for a movie theater. The display system 2 includes a display apparatus 101 which projects a large-screen image onto a screen S, a beacon signal transmission device 102 which emits a beacon signal which corresponds to the image projected by the display apparatus 101, and 3D glasses 201 and 202 which respectively operate based on the beacon signal emitted from the beacon signal transmission device 102.

The display apparatus 101 may autonomously include a panel (not shown), similarly as in the first exemplary embodiment, or be configured as a projection type for large-screen display and project an image onto the screen S. The projection-type display apparatus 101 is generally known in the field of imaging technology, and thus description thereof is omitted herein.

The beacon signal transmission device 102 emits a beacon signal to the outside, the beacon signal synchronizing with a period of displaying a 3D image by the display apparatus 101. The beacon signal transmission device 102 may emit the beacon signal in all directions, or a particular direction. Considering the area of a place where the display system 2 is used and a range of a single beacon signal transmission device 102 which emits a beacon signal, a plurality of beacon signal transmission devices 102 may be installed in the place.

The beacon signal transmission device 102 may be provided in order to communicate with the display apparatus 101 via a cable and/or wirelessly so that the beacon signal corresponds to an image display period in real time.

The 3D glasses 201 and 202 are provided as shutter glasses 201 and 202 as in the first exemplary embodiment. If a plurality of beacon signal transmission devices 102 are installed in the place for use, the 3D glasses 201 and 202 may be disposed the most adjacent to the devices 102 in order to receive a beacon signal from a beacon signal transmission device 102 which emits the clearest beacon signal.

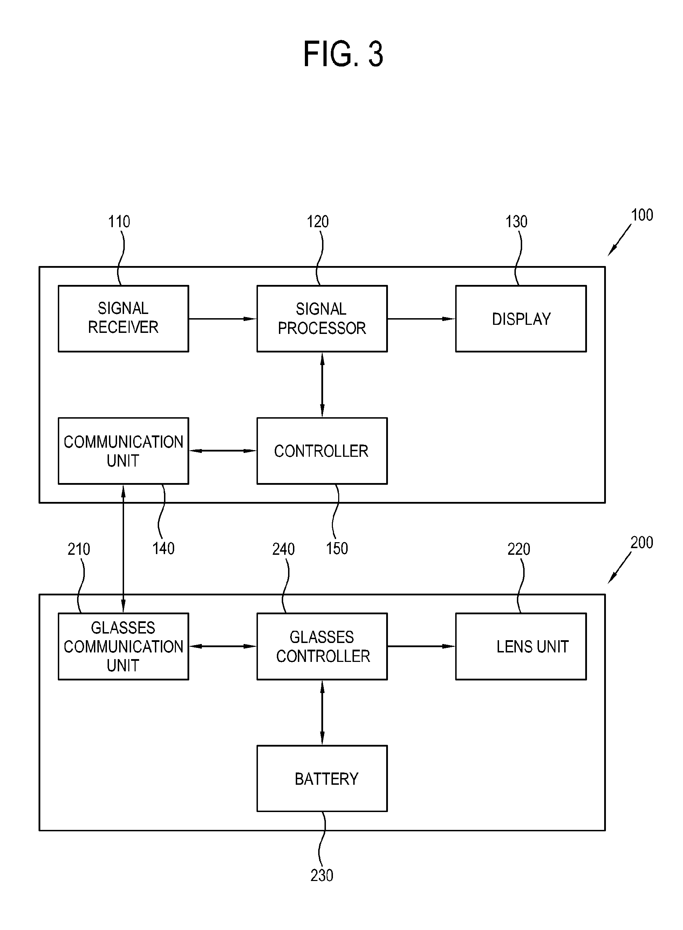

Hereinafter, configurations of the display apparatus 100 and the shutter glasses 200 according to the first exemplary embodiment will be described in detail with reference to FIG. 3. FIG. 3 is a block diagram which illustrates the configurations of the display apparatus 100 and the shutter glasses 200 in the display system of FIG. 1.

As shown in FIG. 3, the display apparatus 100 includes a signal receiver 110 which receives an image signal, a signal processor 120 which processes the image signal received by the signal receiver 110 by executing a preset image processing process, a display 130 which displays the image signal processed by the signal processor 120 as an image, a communication unit 140 which communicates with the shutter glasses 200, and a controller 150 which controls all components of the display apparatus 100 and which controls a beacon signal which corresponds to a 3D image being displayed on the display 130 to be transmitted to the shutter glasses 200.

The shutter glasses 200 include a glasses communication unit 210 which communicates with the display apparatus 100 and receives a beacon signal from the display apparatus 100, a lens unit 220 which operates to transmit and/or block respective light for each of a left eye and a right eye of the user, a battery 230 which supplies operation power for the shutter glasses 200, and a glasses controller 240 which controls an operation of the lens unit 220 based on the beacon signal.

Hereinafter, each component of the display apparatus 100 will be described.

The signal receiver 110 receives and transmits an image signal and/or image data to the signal processor 120. The signal receiver 110 may be configured as any one of various forms which respectively correspond to standards of received image signals and types relating to the display apparatus 100. For example, the signal receiver 110 may receive a radio frequency (RF) signal transmitted from a broadcasting station (not shown) wirelessly, or any one or more of various image signals according to composite video, component video, super video, SCART, high definition multimedia interface (HDMI), DisplayPort, unified display interface (UDI) or wireless HD standards via a cable. When an image signal is a broadcast signal, the signal receiver 110 includes a tuner to tune the broadcast signal by each channel. Alternatively, the signal receiver 110 may receive an image data packet from a server (not shown) via a network.

The signal processor 120 performs various image processing processes on an image signal received by the signal receiver 110. The signal processor 120 outputs a processed image signal to the display 130, so that an image based on the image signal is displayable on the display 130.

The signal processor 120 may perform any type of image processing, without being limited to, for example, decoding based on an image format of an image signal, de-interlacing in order to convert an interlaced image signal into a progressive form, scaling in order to adjust a resolution of an image signal to a preset resolution, noise reduction in order to improve image quality, detail enhancement, and frame refresh rate conversion.

The signal processor 120 may be provided as an integrated multi-functional component, such as a system on chip (SOC), or as an image processing board (not shown) formed by mounting separate components which independently conduct individual processes on a printed circuit board (PCB), and be installed in the display apparatus 100.

The display 130 displays an image based on an image signal output from the signal processor 120. The display 130 may be configured in any one or more of various display modes which respectively use liquid crystals, plasma, light emitting diodes, organic light emitting diodes, a surface conduction electron emitter, a carbon nano-tube, nano-crystals, or the like, without being limited thereto.

The display 130 may further include an additional component depending on its display mode. For example, when the display 130 is configured in a display mode which uses liquid crystals, the display 130 includes a liquid display panel (not shown), a backlight unit (not shown) which provides light to the display panel, and a panel driving board (not shown) which drives the panel.

The communication unit 140 transmits a beacon signal which is received from the controller 150 to the shutter glasses 200. The communication unit 140 is provided in accordance with any one or more of various bidirectional RF wireless communication standards, such as RF and Bluetooth, and performs transmission and reception of various unlimited types of signals and/or information and/or data, including a beacon signal between the display apparatus 100 and the shutter glasses 200.

The controller 150 generates a beacon signal which is synchronized with a display timing or a display period of a 3D image being displayed on the display 130, and transmits the beacon signal to the communication unit 140 to be transmitted to the shutter glasses 200.

Hereinafter, each component of the shutter glasses 200 will be described.

The glasses communication unit 210 is configured based on a communication standard of the communication unit 140 and transmits a beacon signal which is received wirelessly from the communication unit 140 to the glasses controller 140. The glasses communication unit 210 may perform bidirectional communication with the communication unit 140 by not only receiving data from the communication unit 140 but also by transmitting data to the communication unit 140.

The lens unit 220 operates to selectively transmit and/or block light for each respective eye of the user based on a control executed by the glasses controller 240. The lens unit 220 performs selective light transmission for each of the left eye and the right eye of the user, and accordingly the user perceives each of a left-eye image and a right-eye image which are displayed on the display 130 with the left eye and the right eye, respectively.

The lens unit 220 may be configured as any one or more of various types, for example, a liquid crystal lens unit which operates to block light when a predetermined level of voltage is applied from the glasses controller 240 and to transmit light otherwise. Alternatively, the lens unit 220 may have a variable light transmittance which depends on an applied voltage level.

The battery 230 supplies power for operating each component of the shutter glasses 200. The battery 230 is provided as a primary battery or secondary battery, preferably a secondary battery which is chargeable with external power for utility. The battery 230 is controlled by the glasses controller 240, thereby controlling whether to output power to a particular component or level of output voltage.

The glasses controller 240 selectively applies voltage to the lens unit 220 based on a beacon signal received by the glasses communication unit 210, thereby driving the lens unit 220. The glasses controller 240 operates the lens unit 220 to transmit light for the left eye of the user and to block light for the right eye of the user during a vertical synchronization period when a left-eye image is displayed. Conversely, the glasses controller 240 operates the lens 220 to block light for the left eye of the user and to transmit light for the right eye of the user during a vertical synchronization period when a right-eye image is displayed. Further, the glasses controller 240 operates the lens unit 220 to block light for both eyes of the user while an image is scanned onto the display 130. The foregoing operations are provided for illustrative purposes to show that the glasses controller 240 drives the lens unit 220, but do not limit the scope of the present exemplary embodiment.

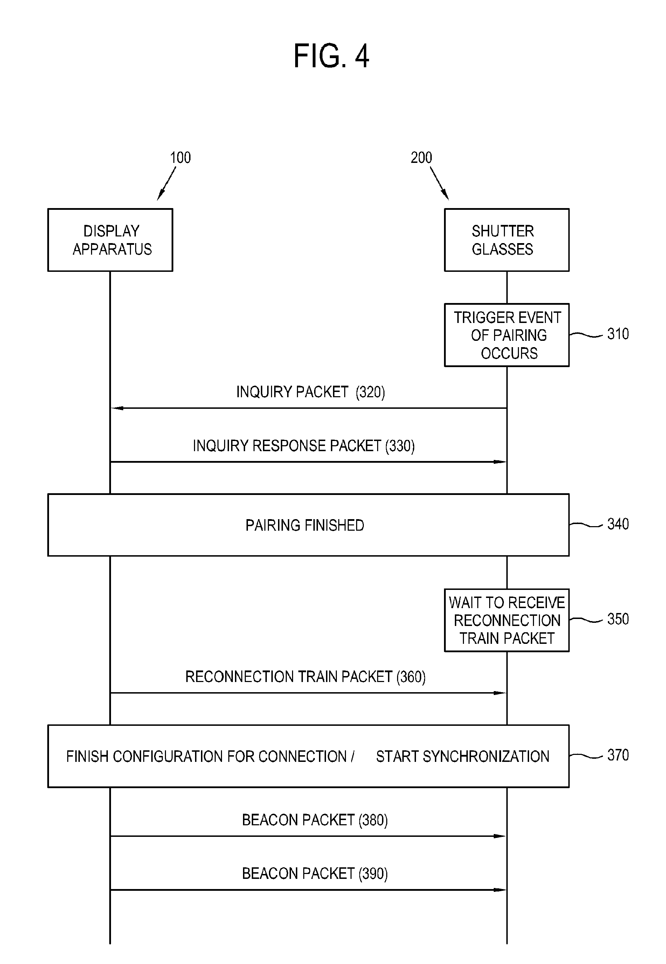

Hereinafter, a signal transmission/reception process between the display apparatus 100 and the shutter glasses 200 to operate the shutter glasses 200 in synchronization with a display period of a 3D image which is being displayed on the display apparatus 100 will be described with reference to FIG. 4. FIG. 4 is a schematic view which illustrates a transmission and a reception of a signal between the display apparatus 100 and the shutter glasses 200.

First, as shown in FIG. 4, a pairing or association of the display apparatus 100 and the shutter glasses 200 should be conducted so that the shutter glasses 200 receive a beacon signal from the display apparatus 100 and operate in accordance with the signal.

To conduct a pairing, in operation 310, a user initiates a trigger event for the pairing by using the shutter glasses 200. The trigger event may occur by any one or more of various actions, e.g., the user retrieving, with the shutter glasses 200, a display apparatus 100 which is present within a communication range of the shutter glasses 200.

In operation 320, the shutter glasses 200 transmit an inquiry packet in order to request a pairing to the display apparatus 100.

Then, in operation 330, the display apparatus 100 transmits an inquiry response packet to the shutter glasses 200 in response to the received inquiry packet. The inquiry response packet may include information relating to a manufacturer of the display apparatus 100, information relating to output level of the display apparatus 100 to transmit a packet, and/or any other suitable information.

In operation 340, the shutter glasses 200 receive the inquiry response packet from the display apparatus 100, thereby completing the pairing between the display apparatus 100 and the shutter glasses 200. In this stage, the shutter glasses 200 transmit an association notification packet which includes information relating to confirming a reception of the inquiry response packet to the display apparatus 100, and the display apparatus 100 transmits a packet which includes information relating to confirming reception of the association notification packet to the shutter glasses 200, thereby completing the pairing.

In particular, the association notification packet which is transmitted from the shutter glasses 200 to the display apparatus may include an address of the shutter glasses 200, a device type of the shutter glasses 200, information relating to characteristics and remaining amount of a battery, and/or any other suitable information. In this way, individual characteristic information is exchanged between the display apparatus 100 and the shutter glasses 200, thereby conducting pairing or association of the components.

When the pairing is finished, in operation 350, the shutter glasses 200 wait to receive a reconnection train packet within a preset time from when the pairing is finished. If the reconnection train packet is not received within the preset time, the shutter glasses 200 transmit a packet which includes information relating to requesting transmission of the reconnection train packet to the display apparatus 100.

In operation 360, the display apparatus 100 transmits the reconnection train packet to the shutter glasses 200. The reconnection train packet includes information which is necessary for the shutter glasses 200 to receive a beacon packet. The reconnection train packet may include, for example, a communication clock of the display apparatus 100, an address of the display apparatus 100, information relating to a period of the beacon packet, and/or any other suitable information.

In operation 370, the shutter glasses 200 complete a configuration for connection to the display apparatus 100 based on the received reconnection train packet, and perform synchronization with a display of an image which is being displayed on the display apparatus 100.

Once the reconnection train packet has been received, the shutter glasses 200 ignore a subsequently received reconnection train packet. Because the display apparatus 100 periodically transmits the reconnection train packet for a predetermined amount of time after finishing the pairing, the shutter glasses 200 may receive the reconnection train packet again in order to be reconnected to the display apparatus 100 without a request, if desiring to be reconnected to the display apparatus 100.

In operations 380 and 390, the shutter glasses 200 receive a beacon packet which is periodically transmitted from the display apparatus 100 based on the reconnection train packet. The shutter glasses 200 operate the lens unit 220 in synchronization with a display period of a 3D image which is displayed on the display apparatus 100, based on the received beacon packet.

The beacon packet may include, for example, a display timing of an image based on the communication clock from the display apparatus 100, a delay value of a timing of operating each respective shutter of the lens unit 220 for both eyes of the user, a running time of a content image being displayed on the display apparatus 100, and/or a remaining running time of the content image after a current time.

With this configuration, when a 3D image of content is displayed on the display apparatus 100, the shutter glasses 200 operate in synchronization with the 3D image.

The foregoing exemplary embodiment has been described with reference to the display system 1 of FIG. 1, but may also be applied to the display system 2 of FIG. 2. In this case, the display system 2 may include a separate communication terminal (not shown) for pairing the display apparatus 101 with each of the shutter glasses 201 and 202.

The communication terminal is installed separate from the display apparatus 101 so that users of the shutter glasses 201 and 202 may easily access the communication terminal, and previously stores information relating to operational characteristics of the display apparatus 101 in order to pair the display apparatus 101 with each of the shutter glasses 201 and 202.

For example, the transmission and/or reception of a packet at operations 310, 320, 330, and 340 of FIG. 4 may be carried out between the communication terminal and the shutter glasses 201 and 202, instead of between the display apparatus 101 and the shutter glasses 201 and 202, and the transmission and/or reception of a packet after operation 350 may be carried out between the display apparatus 101 and the shutter glasses 201 and 202.

Conducting a pairing operation by using the communication terminal instead of the display apparatus 101 may achieve the following effect.

In a cinematic environment such as that shown in FIG. 2, a plurality of theaters may be provided adjacent to each other. In particular, there may be provided a plurality of display apparatuses 101 which display different images, respectively, and a corresponding plurality of beacon signal transmission devices 102 which are installed to emit a signal or packet corresponding to the respective display apparatuses 101, and the apparatus and the devices are disposed adjacent to each other.

If the pairing operation is carried out via the beacon signal transmission devices 102, the shutter glasses 201 and 202 may possibly be paired with a display apparatus 101 which is displaying an irrelevant image, instead of being paired with a display apparatus 101 which is presenting an image that is currently being watched by the users. Such an occasion may occur, for example, when the users are on a corner of the theater distant from the beacon signal transmission device 102 and a signal output from another beacon signal transmission device 102 disposed over a wall is relatively strong.

Thus, if the pairing operation is carried out via the communication terminal, the shutter glasses 201 and 202 selectively receive a reconnection train packet and a beacon packet from a corresponding beacon signal transmission device 102 even though a signal output from an irrelevant beacon signal transmission device 102 is relatively strong.

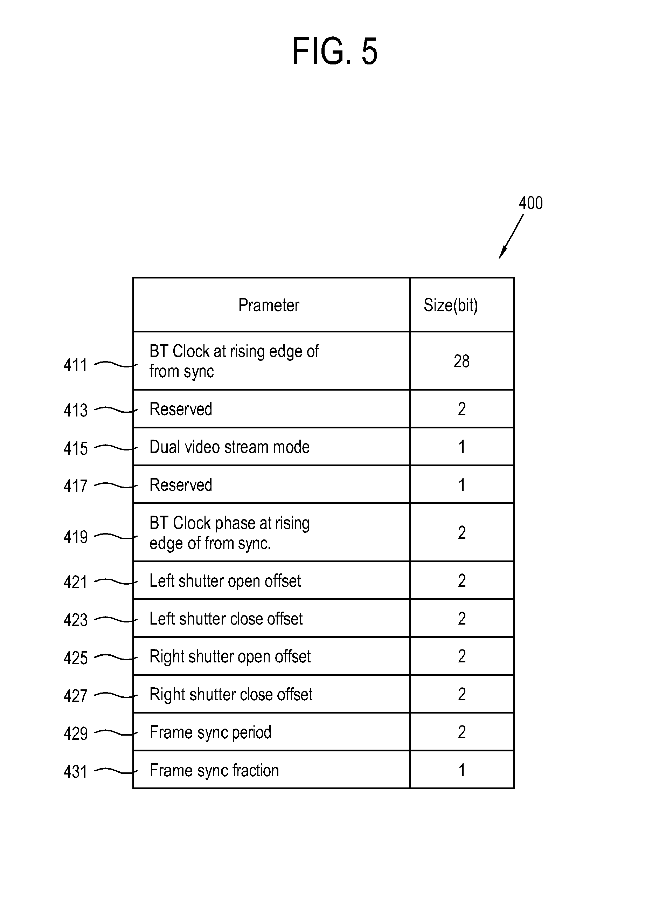

Hereinafter, a configuration of a beacon packet will be described in detail with reference to FIG. 5. FIG. 5 is a table which illustrates a configuration of parameters of one beacon packet 400 which is transmitted at a particular time from the display apparatus 100.

As shown in FIG. 5, the beacon packet 400 transmitted at each particular time from the display apparatus 100 includes various parameters. In particular, it should be noted that the beacon packet 400 may include not only parameters shown in FIG. 5 but also parameters not shown in FIG. 5 based on modifications in design when exemplary embodiments are actually applied to an apparatus.

A BT clock at rising edge of frame sync parameter 411 is used, for example, in Bluetooth (BT) communication, in order for a Bluetooth clock to determine a rising edge of frame synchronization. The parameter 411 occupies 28 bits in the beacon packet 400.

Reserved sections 413 and 417 are spare regions, which do not include any information, and generally set to zero. The Reserved section 413 occupies 2 bits in the beacon packet 400, and the Reserved section 417 occupies 1 bit.

A Dual video stream mode parameter 415 is set when the display apparatus 100 provides a dual view mode in order to display images of two different channels. When the parameter 415 is set to the dual view mode, parameters to be illustrated in this specification as follows may be replaced by parameters with different details. However, in the present exemplary embodiment, the display apparatus 100 provides a 3D display mode. The parameter 415 occupies 1 bit in the beacon packet 400, and may be set to zero (0) in the 3D display mode and to one (1) in the dual view mode.

A BT clock phase at rising edge of frame sync parameter 419 includes a BT clock phase value, which is used to accurately adjust a rising edge of frame synchronization in microseconds (µs). The parameter 419 occupies 2 bits in the beacon packet 400 and may include a value in which falls within an effective range, for example, from 0 to 624 µs.

A Left shutter open offset parameter 421, a Left shutter close offset parameter 423, a Right shutter open offset parameter 425 and a Right shutter close offset parameter 427 include offset values or delay values which are used to accurately adjust performance timing in µs when the lens unit 220 of the shutter glasses 200 performs light transmission/blocking for both eyes of the user based on frame synchronization. Each of the parameters 421, 423, 425 and 427 occupies 2 bits in the beacon packet 400 and includes a value which falls within an effective range, for example, from 0 to 65535 µs.

A Frame sync period parameter 429 and a Frame sync fraction parameter 431 are used to control shutter operations of the lens unit 220 during a time range in which the beacon packet 400 is not received. The Frame sync period parameter 429, which is an integer value, occupies 2 bits in the beacon packet 400 and includes a value which falls within an effective range from 0 to 65535 µs. The Frame sync fraction parameter 431 occupies 1 bit in the beacon packet 400 and includes a value which falls within an effective range from 0 to 255.

However, when the shutter glasses 200 receive a beacon packet transmitted by the display apparatus 100, a reception environment of the beacon packet may change, depending on an environment in which the display apparatus 100 is used.

When the glasses communication unit 210 operates in accordance with a particular RF wireless communication standard, such as Bluetooth, various external devices using a standard which is the same as or similar to the particular wireless communication standard may be present in environments where the display apparatus 100 and the shutter glasses 200 are used. Presence of such external devices may cause heavy traffic or interference in the wireless communication. Further, in a poor wireless communication state due to severe interference in the wireless communication, the shutter glasses 200 may fail to receive a beacon packet at a determined timing.

Thus, the following operations are suggested with respect to the present exemplary embodiment.

The display apparatus 100 determines a wireless communication environment between the display apparatus 100 and the shutter glasses 200 at a preset time or during a particular time range, such as the timing of transmitting the reconnection train packet to the shutter glasses 200 (i.e., operation 360 in FIG. 4) or the timing of transmitting the beacon packet to the shutter glasses 200 (i.e., operations 380 and 390 in FIG. 4). The display apparatus 100 quantifies the determined wireless communication environment as being equal to a preset value or level, and records information relating to the determined wireless communication environment level in the beacon packet.

Then, the display apparatus 100 transmits the beacon packet, which includes the recorded information relating to the wireless communication environment level, to the shutter glasses 200.

The shutter glasses 200 extract the information relating to the wireless communication environment level from the beacon packet which is received from the display apparatus 100, and change a reception frequency of the beacon packet via the glasses communication unit 210 based on the extracted information.

The shutter glasses 200 receive the beacon packet with the changed reception frequency, thereby saving power consumption of the battery 230 in a good communication environment and increasing the number of times receiving the beacon packet in a poor communication environment, thereby securing normal operations of the lens unit 220.

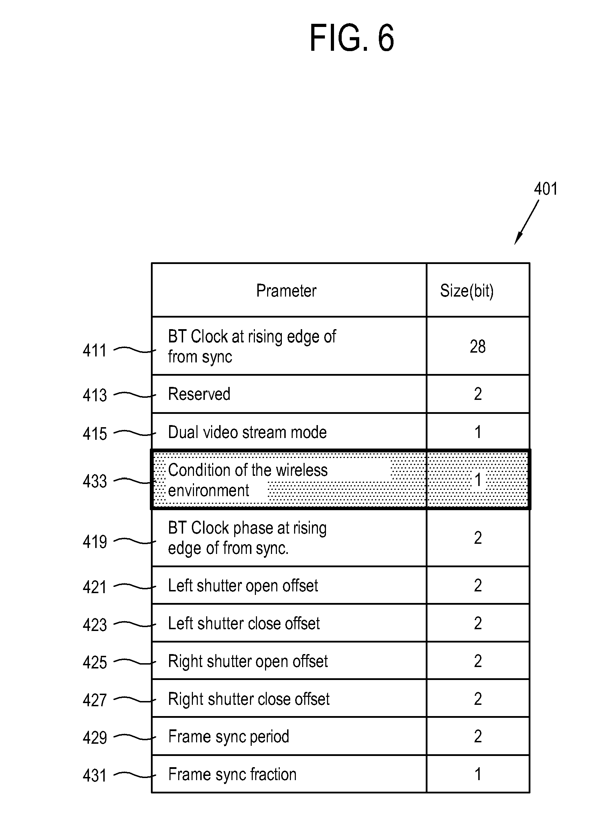

FIG. 6 is a table which illustrates a configuration of parameters of a beacon packet 401 which includes wireless communication environment level information 433 recorded by the display apparatus 100, according to an exemplary embodiment.

In FIG. 6, parameters 411, 413, 415, 419, 421, 423, 425, 427, 429 and 431 are substantially the same as those in FIG. 5.

However, a Condition of the wireless environment parameter 433 of FIG. 6 replaces the Reserved section 417 of FIG. 5. The Condition of the wireless environment parameter 433 includes wireless communication environment level information, that is, the display apparatus 100 records the determined wireless communication environment level information in the Reserved section 417 of FIG. 5 to replace the section 417 with the parameter 433.

In particular, the parameter 433 which includes information relating to a wireless communication environment level quantifies how clear a wireless communication environment between the display apparatus 100 and the shutter glasses 200 is or how little communication interference is in the environment. For example, the higher the wireless communication environment level is, the higher a reception success rate of the shutter glasses 200 receiving the beacon packet 401 from the display apparatus is. Conversely, the lower the wireless communication environment level is, the lower the reception success rate of the shutter glasses 200 receiving the beacon packet 401 from the display apparatus 100 is, and the higher an error rate is.

The wireless communication environment level may be expressed variously depending on a respective design. For example, the display apparatus 100 may classify the determined wireless communication condition as corresponding to one of a plurality of levels represented by integers from 0 to 7.

Each integer illustrates an environment as follows. For example, 1 represents the worst condition of the wireless communication environment, 2 represents a very poor condition of the wireless communication environment, 3 represents a relatively poor condition of the wireless communication environment, 4 represents a normal or average condition of the wireless communication environment, 5 represents a relatively good condition of the wireless communication environment, 6 represents an excellent condition of the wireless communication environment, 7 represents the best condition of the wireless communication environment, and 0 represents no information.

The display apparatus 100 may determine the wireless communication environment by using any one or more of various methods. For example, the display apparatus 100 may scan a frequency channel for signal transmission between the display apparatus 100 and the shutter glasses 200. The display apparatus 100 may detect a wireless noise level of a particular frequency channel while scanning the particular frequency channel and determine the wireless communication environment based on the detected wireless noise level.

The display apparatus 100 sets the wireless communication environment level to vary inversely with respect to the wireless noise level. As a relatively high wireless noise level indicates a correspondingly poor communication condition, the display apparatus 100 sets a correspondingly low wireless communication environment level value. Conversely, as a relatively low wireless noise level indicates a correspondingly good communication condition, the display apparatus 100 sets a correspondingly high wireless communication environment level value.

Alternatively, the display apparatus 100 may determine the wireless communication environment based on a reception success rate of the shutter glasses 200 with respect to receiving a beacon packet. For example, the display apparatus 100 acquires information relating to a reception success rate of the shutter glasses 200 receiving a beacon packet during a preset time range from the shutter glasses 200 and determines the wireless communication environment level to vary directly with respect to the reception success rate.

In particular, as a relatively low reception success rate of the shutter glasses 200 with respect to receiving the beacon packet indicates a correspondingly poor communication condition, the display apparatus 100 sets a correspondingly low wireless communication environment level value. Conversely, as a relatively high reception success rate indicates a correspondingly good communication state, the display apparatus 100 sets a correspondingly high wireless communication environment level value.

When receiving the beacon packet which has been generated in the foregoing way from the display apparatus 100, the shutter glasses 200 extract and acquire the wireless communication environment level information from the received beacon packet. In particular, as shown in FIG. 6, the shutter glasses 200 acquire information relating to the Condition of the wireless environment parameter 433 from the beacon packet 401.

The shutter glasses 200 store a respective reception period of the beacon packet based on each corresponding integer value of the parameter 433 in advance, and replace a current value with a selected reception period based on the acquired wireless environment level from among a plurality of pre-stored reception periods.

For example, when the parameter 433 which relates to the acquired wireless environment level has a relatively low value, such as, for example, 1, 2, or 3, the shutter glasses 200 adjust the reception period of the beacon packet to be shorter than a default value, thereby increasing the reception frequency of the beacon packet. When the parameter 433 which relates to the acquired wireless environment level has a relatively high value, such as, for example, 5, 6, or 7, the shutter glasses 200 adjust the reception period of the beacon packet to be longer than the default value, thereby decreasing the reception frequency of the beacon packet. Alternatively, when the parameter 433 which relates to the acquired wireless environment level has an average value, such as, for example, 4, the shutter glasses 200 maintain the reception period of the beacon packet.

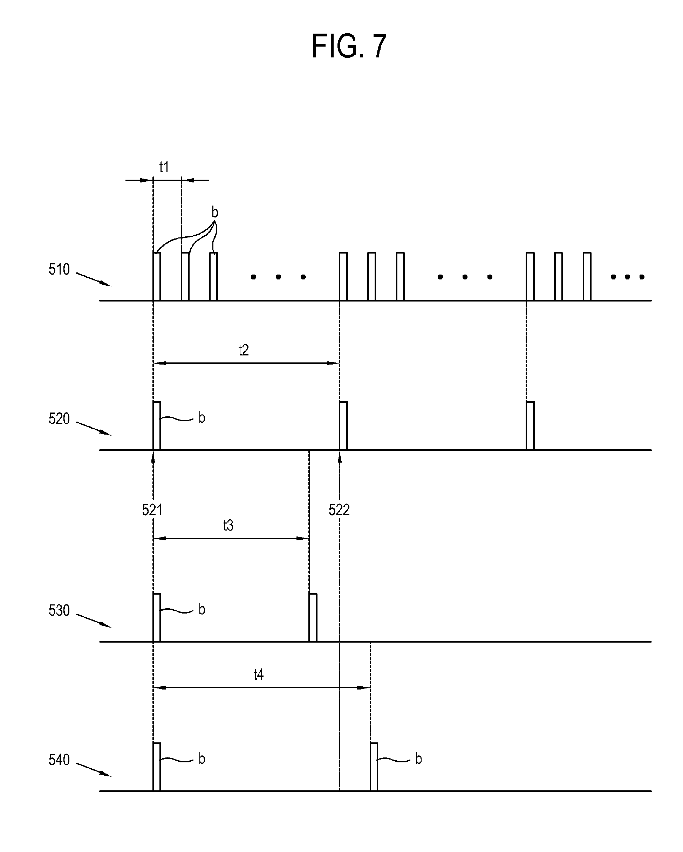

FIG. 7 is a timing diagram which illustrates beacon packets b which are transmitted by the display apparatus 100 and received by the shutter glasses 200. In a graph shown in FIG. 7, a horizontal axis represents time.

In FIG. 7, a first graph 510 is a timing diagram which illustrates the display apparatus 100 transmissions of the beacon packets b. According to the diagram, the display apparatus 100 periodically transmits the beacon packets b to the outside once during every preset time interval of t1.

However, because the shutter glasses 200 generally use a built-in battery 230, it is important that an operation of the shutter glasses 200 be ensured while an image is displayed on the display apparatus 100. In particular, it is crucial for the shutter glasses 200 to secure as much operation time as possible by minimally consuming power of the battery 230.

To this end, the shutter glasses 200 receive the beacon packets b at timings as shown in a second graph 520. In particular, the shutter glasses 200 receive the beacon packets b from the display apparatus 100 once every time interval t2, which is longer than the time interval t1, i.e., the transmission period of the display apparatus 100. The value of t2 is not particularly limited, provided that it is greater than t1. For example, t2 may be set to a value that is equal to a multiplicative product of a predetermined integer and t1. For example, t1 may be set equal to 80 ms, and t2 may be set equal to 560 ms, which is seven times t1.

The shutter glasses 200 block the power supply from the battery 230 in order to inactivate the glasses communication unit 210 for a time t2 from a first time point 521 just after a beacon packet b is received to a second time point 522 when a next beacon packet b is received, thus not receiving the beacon packets b but operating the lens unit 220 based on the beacon packet b received at the first time point 521. Such an operation is referred to as a free-run operation.

At the second time point 522, the shutter glasses 200 allow the power supply from the battery 230 in order to activate the glasses communication unit 210, thereby receiving the beacon packet b. After receiving the beacon packet b, the shutter glasses 200 inactivate the glasses communication unit 210 again and operate the lens unit 220 in the free-run mode.

In particular, the shutter glasses 200 receive the beacon packet b at periodic intervals equal to t2, which is longer than t1, the transmission period of the display apparatus 100, and inactivate the glasses communication unit 210 for intervals of t2 during which the beacon packet b is not received, thereby saving power consumption of the battery 230. The interval t2 is a default value of the reception period for the shutter glasses 20 with respect to receiving the beacon packet b.

The shutter glasses 200 acquire the wireless communication environment level information from the received beacon packet b. When the wireless communication environment level is relatively low, that is, when the wireless communication condition is relatively poor, the shutter glasses 200 increase the reception frequency for the beacon packet b, as illustrated in a third graph 530.

In the third graph 530, when the wireless communication condition is relatively poor, the shutter glasses 200 change the reception period of the beacon packet b to t3, which is smaller than the default value of t2. Accordingly, as the shutter glasses 200 receive the beacon packet b more frequently for a predetermined time, the reception frequency for the beacon packet b is greater than the default value. Thus, the error rate of the shutter glasses 200 receiving the beacon packet b for the predetermined time is reduced, thereby securing normal operations of the lens unit 220.

Conversely, when the wireless communication environment level is relatively high, that is, when the wireless communication condition is relatively good, the shutter glasses 200 decrease the reception frequency of the beacon packet b, as illustrated in a fourth graph 540.

In the fourth graph 540, when the wireless communication condition is relatively good, the shutter glasses 200 change the reception period of the beacon packet b to t4, which is greater than the default value of t2. Accordingly, as the shutter glasses 200 receive the beacon packet b less frequently, the reception frequency of the beacon packet b is lower than the default value. Thus, power consumption of the battery 230 may be reduced.

In particular, similarly as described above with respect to t2, respective values for each of t3 and t4 may be designated as values which are integral multiples of t1.

Further, while an image is displayed on the display apparatus 100, in particular, while the shutter glasses 200 receive the beacon packet b, the display apparatus 100 and the shutter glasses 200 may perform the foregoing processes only during a preset time range or periodically.

For example, the display apparatus 100 and the shutter glasses 200 may be configured to perform the foregoing processes only during a preset time range after starting to display an image, and the shutter glasses 200 may be configured to receive the beacon packet b with a predetermined reception frequency after the preset time range.

Alternatively, the display apparatus 100 may determine a wireless communication environment in real time while transmitting the beacon packet b, and may transmit a beacon packet b which includes a determination result reflected to the shutter glasses 200. The shutter glasses 200 may then acquire a wireless communication environment level from the beacon packet b upon receiving the beacon packet b, and may change the reception frequency in real time based on the acquired wireless communication environment level. In this case, when there is no change in the acquired wireless communication environment level, the shutter glasses 200 may maintain a current reception frequency.

Further, when the beacon packet b does not include wireless communication environment level information or when the wireless communication environment level is normal, the shutter glasses 200 may maintain a default reception frequency.

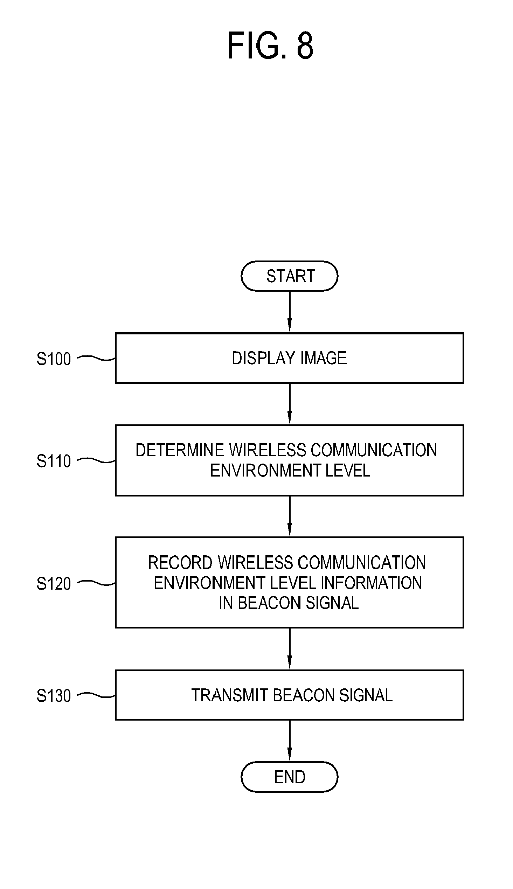

Hereinafter, a control method which is executable by using the display apparatus 100 according to an exemplary embodiment will be described with reference to FIG. 8. FIG. 8 is a flowchart which illustrates the control method.

As shown in FIG. 8, in operation S100, the display apparatus 100 displays an image. Then, in operation S110, the display apparatus 100 determines a wireless communication environment level with respect to wireless communication with the shutter glasses 200.

As an image is displayed, in operation S120, the display apparatus 100 generates a beacon signal which corresponds to the image and records information relating to the determined wireless communication environment level in the beacon signal. In operation S130, the display apparatus 100 transmits the beacon signal with the recorded information relating to the determined wireless communication environment level to the shutter glasses 200.

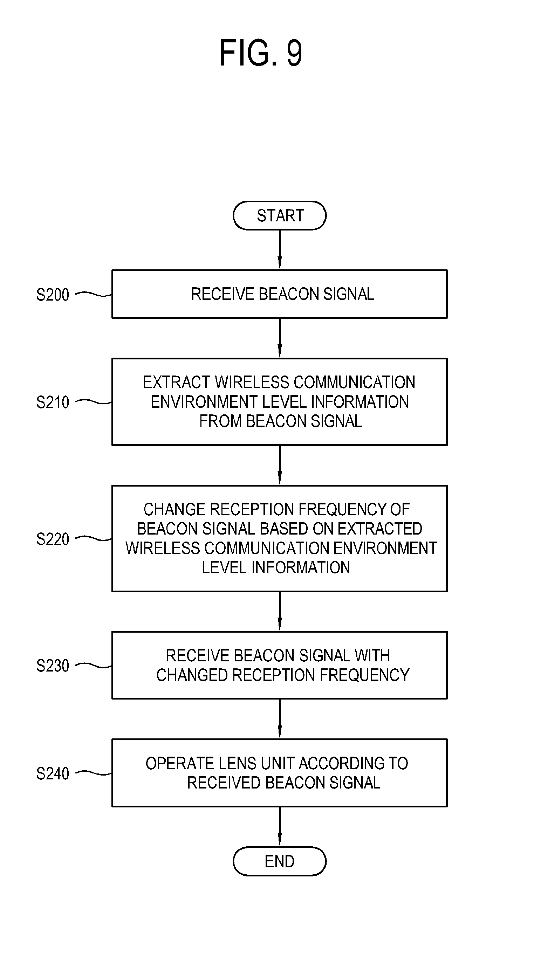

Hereinafter, a control method which is executable by using the shutter glasses 200 according to an exemplary embodiment will be described with reference to FIG. 9. FIG. 9 is a flowchart which illustrates the control method.

As shown in FIG. 9, in operation S200, the shutter glasses 200 receive a beacon signal from the display apparatus 100.

In operation S210, the shutter glasses extract information relating to a wireless communication environment level from the received beacon signal, and then, in operation S220, the shutter glasses change a reception frequency of the beacon signal based on the extracted information relating to the wireless communication environment level.

In operation S230, the shutter glasses 200 receive the beacon signal with the changed reception frequency, and in operation S240, the shutter glasses operate the lens unit 220 based on the received beacon signal.

Although a few exemplary embodiments have been shown and described, it will be appreciated by those skilled in the art that changes may be made in these exemplary embodiments without departing from the principles of the present inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A multi-view device of a display apparatus comprising:
a lens unit operating to selectively transmit or block light;
a communication unit communicating with the display apparatus displaying an image; and
a controller receiving a beacon signal synchronizing with a display period of the image from the display apparatus through the communication unit, controlling an operation of the lens unit according to the beacon signal, and changing a reception frequency of the beacon signal through the communication unit based on information about a wireless communication environment level between the display apparatus and the multi-view device extracted from the beacon signal.

2. The multi-view device of claim 1, wherein the controller reduces the reception frequency when the wireless communication environment level is higher than a predetermined threshold level, and increases the reception frequency when the wireless communication environment level is lower than the predetermined threshold level.

3. The multi-view device of claim 2, wherein the wireless communication environment level varies inversely proportionally with respect to a wireless noise level detected by scanning a frequency channel of the display apparatus over which the beacon signal is transmitted.

4. The multi-view device of claim 2, wherein the wireless communication environment level varies proportionally with respect to a reception success rate of receiving the beacon signal from the display apparatus via the communication unit.

5. The multi-view device of claim 1, wherein the controller extracts the wireless communication environment level comprising a preset integer from the beacon signal and changes a reception period of the beacon signal to a preset period based on the preset integer.

6. The multi-view device of claim 1, wherein the controller changes the reception frequency of the beacon signal by performing at least one of adjusting a reception period of the beacon signal to be longer than a default value and adjusting the reception period of the beacon signal to be shorter than the default value.

7. The multi-view device of claim 1, wherein the controller periodically extracts updated information about the wireless communication environment level from the beacon signal and changes the reception frequency in real time based on the updated information about the wireless communication environment level.

8. A display apparatus comprising:
a signal reception unit receiving an image signal;
a signal processing unit processing the image signal received by the signal reception unit according to a preset image processing process to display an image on a display unit;
a communication unit communicating with at least one multi-view device operating in synchronization with the image; and
a controller transmitting a beacon signal synchronizing with a display period of the image to the at least one multi-view device through the communication unit, determining a wireless communication environment level between the display apparatus and the multi-view device, and recording the determined wireless communication environment level in the beacon signal so that the multi-view device changes a reception frequency of the beacon signal based on the wireless communication environment level recorded in the beacon signal.

9. The display apparatus of claim 8, wherein the controller detects a wireless noise level by scanning a frequency channel over which the beacon signal is transmitted, and determines the wireless communication environment level based on an inversely proportional variation with respect to the wireless noise level.

10. The display apparatus of claim 8, wherein the controller determines a reception success rate of the multi-view device with respect to receiving the beacon signal and determines the wireless communication environment level based on a proportional variation with respect to the reception success rate.

11. The display apparatus of claim 8, wherein the controller records the wireless communication environment level as a preset integer in the beacon signal so that the multi-view device extracts the wireless communication environment level comprising the preset integer from the beacon signal and changes a reception period of the beacon signal to a preset period based on the preset integer.

12. The display apparatus of claim 8, wherein the controller determines the wireless communication environment level periodically while transmitting the beacon signal, and records and transmits information about the periodically determined wireless communication environment level in the beacon signal in real time.

13. The display apparatus of claim 8, wherein the controller records information about the wireless communication environment level in the beacon signal only during a preset interval of a time range during which the beacon signal is transmitted.

14. A control method of a multi-view device of a display apparatus, the control method comprising:
receiving a beacon signal which synchronizes with a display period of an image which is displayed by the display apparatus;
extracting information about a wireless communication environment level between the display apparatus and the multi-view device from the beacon signal and changing a reception frequency of the beacon signal based on the information about the wireless communication environment level; and
receiving the beacon signal with the changed reception frequency and operating a lens unit of the multi-view device according to the received beacon signal.

15. A control method of a display apparatus, the control method comprising:
displaying an image;
determining a wireless communication environment level between the display apparatus and at least one multi-view device which operates in synchronization with the displaying the image;
generating a beacon signal which synchronizes with a display period of the image, and recording information about the determined wireless communication environment level in the beacon signal so that the multi-view device changes a reception frequency of the beacon signal based on the recorded information; and
transmitting the beacon signal with the recorded information about the wireless communication environment level to the multi-view device.
